# EUROPEAN PATENT APPLICATION

(11) **EP 3 000 525 A1**
(43) Date of publication of application: **30.03.2016**
(21) Application number: 14186594.9
(22) Date of filing: 26.09.2014
(51) Int. Cl.: B01J 8/18, B01J 8/00

(54) **Fluidized bed reactor**

(71) Applicant: Doosan Lentjes GmbH, 40880 Ratingen (DE)
(72) Inventor: Narin, Oguzhan, 45549 Sprockövel (DE); Brosch, Björn, 45136 Essen (DE)
(74) Representative: Becker, Thomas

(57) **Abstract**

The invention relates to a fluidized bed reactor, comprising a reaction chamber, and a centrifugal separator having a common wall with the reaction chamber.

## Description

The invention relates to a fluidized bed reactor, comprising a reaction chamber (reactor chamber) and an associated separator (cyclone).

Fluidized bed reactors, designed as combustors, incineration reactors, boilers, gasifiers, steam generators etc. are known for a long time and disclosed i. a. in US 5,203,284 and US 6,802,890 B2.

The fluidized bed is arranged in a corresponding reaction chamber of a reactor and mainly defined by a grid, grate or perforated plate onto which the incinerator charge is placed. As an airstream flows through the openings of said support member (grate or the like) the particulate incinerator charge is fluidized. This gives the fuel material the behaviour of a boiling liquid. The aerated fuel material allows to promote the incineration process and effectivity.

As most of said fuel materials like coal, timber etc, contain sulfur and/or harmful substances it is necessary to clean the gases leaving the reaction chamber in a suitable way.

US 5,203,284 and US 6,802,890 both relate to a fluidized bed reactor with an associated centrifugal separator assembly to separate solid particles from the gas released from said reaction chamber.

The separator of US 5,203,284 is characterized by a cylindrical shape of circular cross-section and a tunnel-like bridge between reactor and separator. The circular cross-section allows favourable particle separation but requires much space.

According to US 6,802,890 B1 a centrifugal separator assembly is used which is characterized by a multi-corner shape wherein the angle between adjacent wall sections exceeds 90 degrees. The corner areas are rounded by a refractory lining on the inside. This construction allows to use one part of the reactor wall as one wall section of the separator and thus to reduce the required space, but needs additional construction work and thus increases the costs.

Insofar there is a continuous demand for further improvements with respect to gas purification (particle separation) and construction.

The invention is based on the following finding:

A decisive aspect to make gas purification more efficient leads to that part of the fluidized bed reactor, where the combustion gases leave the reaction chamber and enter into an associated gas cleaner (gas separator).

The fluidized (aerated) incineration charge typically extends over a considerable height of the combustion chamber, in many cases over at least 75 % of said height, often close to 100 %.

It derives from this that the transition region between reaction chamber (incineration space) and the associated reactor installations like gas/solids separators is characterized by at least two parameters, namely:
- the transition is effected in the upper part of the combustion chamber, i.e. more or less opposite to the reactor grid/grate at its lower end.
- there is a direct overflow from the reaction chamber into the associated gas treating apparatus.

During extensive trials and tests it became aware that guidance of the combustion gas within the reaction chamber straight ahead of the outlet port for said gas has the following effects:
- The gas stream receives a defined flow direction and a constant velocity before entering the gas purification device.
- The arrangement of guidance means in front of the gas outlet of the reaction chamber allows to arrange the successive gas purification device closer to the reaction chamber compared with prior art devices and thus to construct the fluidized bed reactor - in total - much more compact.

According to a first aspect of the invention, the gas stream is focussed within the reaction chamber, namely in a tunnel-like guidance member, protruding from the outlet opening in the reaction chamber wall into the reaction chamber. Depending on the size, cross-section and orientation of said tunnel the corresponding gas stream may be directed in an optimized way into the subsequent separator assembly.

A second important aspect is the guidance of the gas stream (including solid particles) after entering the separator (after the tunnel) and along the subsequent entrance section. The separator may achieve best separation results in case of a smooth and continuous gas flow. Smooth and continuous means that the gas flow is not interrupted and/or deviated by any protrusions, installations, deviations etc. inside the separator, in particular along the inner surface of the separator. This includes the avoidance of substantial changes in the profile of the inner wall surface of the separator and will be described in more details hereinafter. Insofar a curved entrance section and thus a curved bounding wall for the gas behind the tunnel is favourable.

These two procedural aspects are distinct from the structural aspect to limit the size of the device. This may be achieved by designing the separator and the reactor chamber with a common wall. This can either be a curved wall or a planar wall. In case of a curved wall it should be equivalent to the curvature of the entrance section, i.e. convex with respect to the interior of the separator. The common wall allows to avoid any spaces between reactor and separator and saves material costs.

In its most general embodiment the invention is defined by
a) a reactor chamber with at least one outlet port at its upper part,
b) the outlet port is designed as a tunnel, allowing a mixture of gas and solid particles, exhausted from the reaction chamber, enter an associated centrifugal separator,
c) the centrifugal separator is of cylindrical shape and features an outer paneling, a first exit for the purified gas at its top end and a second exit for the a solid particles at its bottom end,
d) the tunnel comprises a vertically extending outer side wall, a vertically extending inner side wall, a horizontally extending bottom wall and a horizontally extending ceiling wall,
e) the outer side wall of the tunnel extends continuously into an entrance section of the outer paneling of the separator,
f) said entrance section extends continuously into a first curved section of the outer paneling, which first curved section being arranged at least in an axial projection of the tunnel,
g) said first curved section is followed by one or more further sections of the paneling, which end up at the inner side wall of the tunnel, wherein
h) at least one further section forms a common wall with the reactor chamber.

As far as the separator is characterized as being of cylindrical shape this defines the general shape, while the exact outer and inner surfaces depend on the specific design according to the invention.

The first curved section follows the entrance section, along which the gas enters the separator. This first curved section is of particular importance as it influences the further gas stream (gas path) within the separator and thus the separation efficiency characteristically. It is important that the entrance section extends continuously into said first curved section, meaning that a continuous, uninterrupted steady gas flow may be possible; in other words: that a smooth gas stream is initiated, which then proceeds into a circulating flow on its way to the exit of the separator. While the entrance section may be more or less planar, or slightly curved like an involute, the first curved section turns the gas flow into a rotational movement around the central longitudinal axis of the cyclone (separator). The first curved section may extend along 60 to 150 degrees with optional minimum angles at 70⁰, 75°, 80°, 90° and optional maximum angles at 100°, 110° or 115°.

Form this it derives that the tunnel is preferably arranged "tangentially" to the separator and/or that said subsequent first curved section extends along at certain angle with respect to said longitudinal axis.

This eccentric tunnel arrangement gives further space to allow a common wall between separator and reactor and reduces the overall space needed for the complete installation.

The fluidized bed reactor may by varied by one or more of the following features:
- The tunnel length, meaning the length of the tunnel protruding into the reaction chamber, may be at least 3 m in a typical industrial fluidized bed reactor, characterized by the following data:

| | |
|---|---|
| height: | 30-60 |
| width: | 15-40 |
| depth: | 15-40 |
| capacity range: | 100-600 MW (electrical) |
| separators: | 2-8 |

- In other applications the tunnel data may be within the following ranges: length (horizontal): 1-5m, width (horizontal): 0,5-3m, height (vertical): 2-15m.
- At least one tunnel wall may be defined by an outer wall of the reaction chamber.
- At least one tunnel wall may protrude from an outer wall of the reaction chamber into said reactor chamber.
- Although the geometrical design of the tunnel is not limited according to the invention, one embodiment provides a tunnel which has its largest cross-section at its end inside the reaction chamber. In other words: This design is similar to a funnel, the cross-section of which gets smaller in the flow direction of the corresponding gas stream. This allows acceleration of the gas velocity, before leaving the reaction chamber and before entering the gas separator.
- At least one tunnel wall may extend at an angle smaller than 90 % (for example 30-80° or 45-75°) to the adjacent outer wall of the reaction chamber. This allows a more or less smooth transition for the gas into the separator.
- The outer walls of the reaction chamber and/or the tunnel and/or the separator are typically made of hollow-tubes, cooled with a fluid like water, which extend vertically in a spaced, parallel relationship. A continuous fin may extend between corresponding portions of adjacent tubes for their entire length to form a gas-tight paneling. Fins and tubes may be secured by welding.
- At least part of the outer paneling of the separator (in particular the entrance section and/or the first curved section) may be lined along its inner surface with a refractory material such as a ceramic monolithic. In other words: The refractory protective follows shape of the paneling. The refractory layer is of more or less constant thickness (notwithstanding the different depths of fins and tubes) and should feature a continuous inner surface. The invention avoids material aggregations to provide curved corner sections as the paneling avoids corners at least along its entrance section and first curved section but preferably all over its periphery.
- One or more of the further sections (after the first curved section) of the outer paneling may be planar. Especially the common wall of reactor and separator may be a planar wall, especially if the reactor has planar walls.
- A further embodiment is characterized in that said first curved section extends continuously into the adjacent further section.
- This further section and subsequent further sections again may continuously extend into each other.
- Transition areas between adjacent sections of the outer paneling are preferably curved to allow a homogenous turbulence free gas flow all around the vortex chamber of the separator. Insofar a separator without any corner along the outer paneling is an optimum.
- according to another optional feature said further section of the outer paneling, ending up at the inner side wall of the tunnel, forms an angle of less than 90 degrees with said inner side wall of the tunnel.
- The fluidized bed reactor may have at least two outlet ports and at least two associated centrifugal separators of the type mentioned. This allows a design wherein the outer paneling of said two separators have a common planar wall section. This again reduces the overall space required for such a plant and the costs.

Further features of the invention will derive from the features of the sub claims and the following description of the drawing, wherein the drawing schematically represents in:
- Figure 1:: A 3-dimensional view on and into a separator attached to a fluidized bed reactor
- Figure 2:: A horizontal cross sectional view of a first embodiment of the separator
- Figure 3:: A horizontal cross sectional view of a second embodiment of the separator
- Figure 4:: A horizontal cross sectional view of a third embodiment of the separator
- Figure 5:: A horizontal cross sectional view of an arrangement with two separators attached to one common reactor chamber.

In the figures same parts or parts of equivalent function are identified with the same numerals.

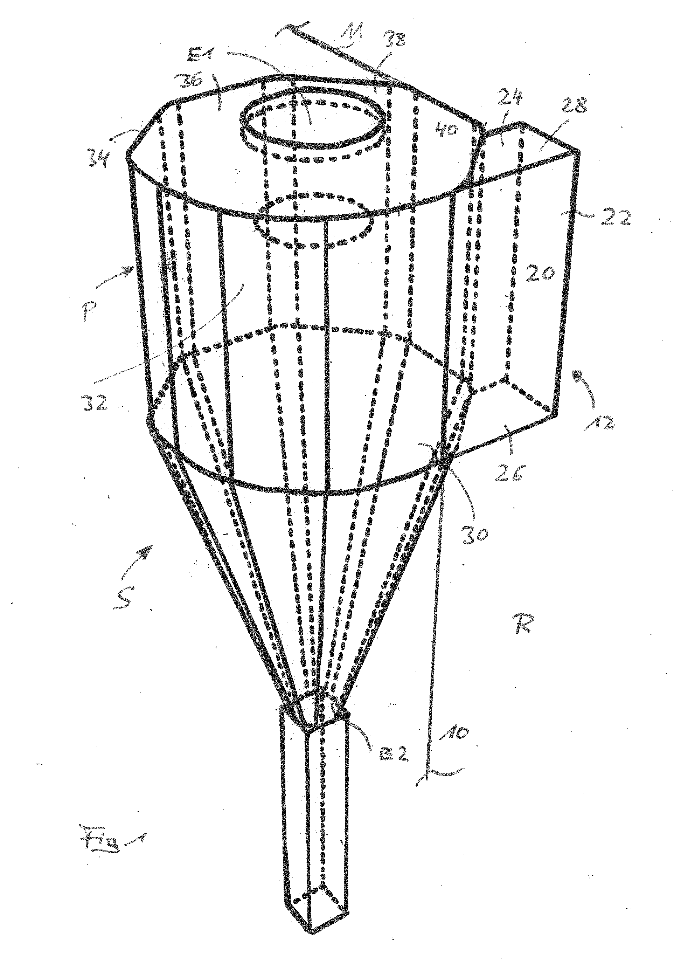

Figure 1 displays a fluidized bed reactor R, most of which has been cut away for simplification, and an associated separator S of a cyclone type.

Said reactor R has one outlet port 12 at its upper part, next to a sidewall 10. Said outlet port 12 is designed as a tunnel 20, which allows a mixture of gas and solid particles, exhausted from the reaction chamber R, to enter into the associated centrifugal separator S.

The separator S is of generally cylindrical shape and features an outer paneling P, a first exit E1 for the purified gas at its top end and a second exit E2 for the solid particles at its bottom end.

The tunnel 20 comprises a vertically extending outer sidewall 22, which is a common wall with reactor wall 10, a vertically extending inner sidewall 24 (from which a further reactor wall 11 sticks out, a horizontally extending bottom wall 26 and a horizontally extending ceiling wall 28.

The outer sidewall 26 of the tunnel 20 extends continuously into an entrance section 30 of the outer paneling P of the separator S. In other words: both are flush to each other.

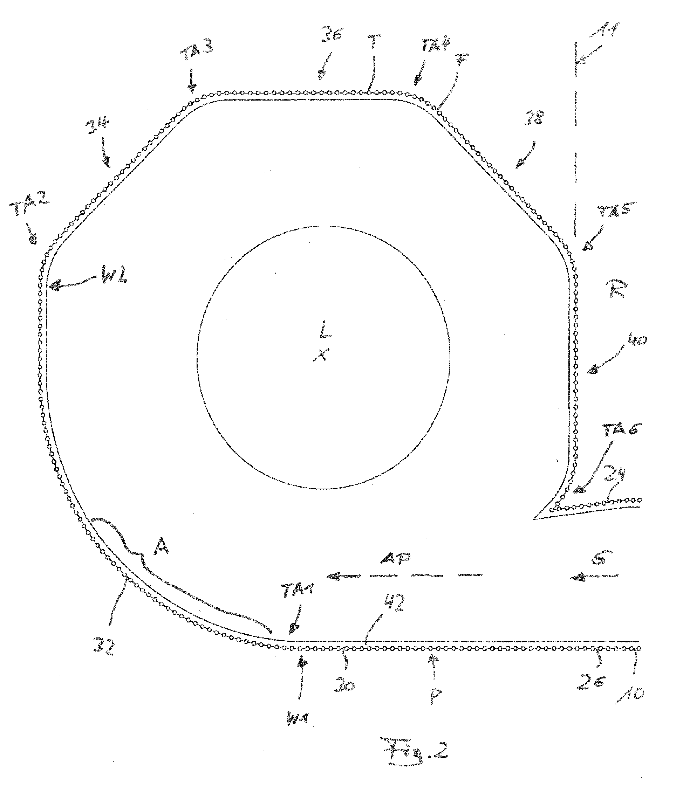

Said entrance section 30 extends continuously into a first curved section 32 of the outer paneling P. In other words: They both provide a common, continuous surface line, including a first transition area TA 1 between the planar entrance section 30 and the first curves section 32. This curved section 32 extends along an angle of roughly 100°, including an area A which is arranged in an axial projection of said tunnel 20, symbolized in Figure 2 by arrow AP.

Said first curved section 32 is followed by a second transition area TA2 and four planar further sections 34, 36, 38, 40 with further curved transition areas TA3, TA4, TA5 between adjacent sections (34, 36; 36,38; 38,40) of the paneling P.

It is important that paneling P has no corner area. To the contrary: All sections 30, 32, 34, 36, 38, 40 avoid any angled corner. All sections of the paneling (outer envelope) of separator S are either planar or curved and any adjacent planar sections are avoided. In other words: In case of a planar section, like 34, this planar section 34 is followed (in a circumferential direction) by a curved sections TA2, TA3.

The paneling P and its circumferential sections, made of water-cooled tubes T and fins F (between adjacent tubes T), follow a "soft line" with either curved or planar sections and avoid any adjacent planar surface sections and thus avoid any corner areas, which would worsen the separation effect within separator S.

Further section 40 ends up via a final curved transition area TA6 at the inner sidewall 24 of tunnel 20, while said planar section 40 forms a common wall with wall 11 of reactor chamber R.

As may best be seen from Figure 2 a gas/solids-mixture takes the following way between reactor chamber R and separator S:
- through tunnel 20, between sidewalls 24, 26,
- along entrance section (bounding wall) 30, further along first curved section 32, then via transition area TA1 along further sections 34, TA3, 36, TA4, 38, TA5, 40, TA6
- until it has made more or less a full circle on its further way downwardly, before it leaves the separator S via exit E2.

The central longitudinal axis of separator S is characterized by reference L in Figure 2. Accordingly, first curved section 32 extends about roughly 100 degrees, calculated between the peripheral end (marked by W1 in Fig. 2) of entrance section 30 and first part of transition area TA2 (marked by W2 in Fig. 2).

As may best be seen from Figure 2 to 5 said paneling P comprises and inner refractory layer 42 of substantially constant thickness so as to provide a continuous, corner-free and smooth inner surface, being the surface defining the vortex-chamber of separator S.

The design according to Figure 2 has the following advantages:
Following the design of planar entrance section 30 and first curved section 32 a perfect smooth bounding wall is realized. The gas stream (including solid particles) hits the bounding wall (sections 30, 32) more or less tangential, i. e. any larger angles are avoided and accordingly there is nearly no rebound.
This increases the homogeneity of the gas stream and reduces wear of the refractory lining 42.

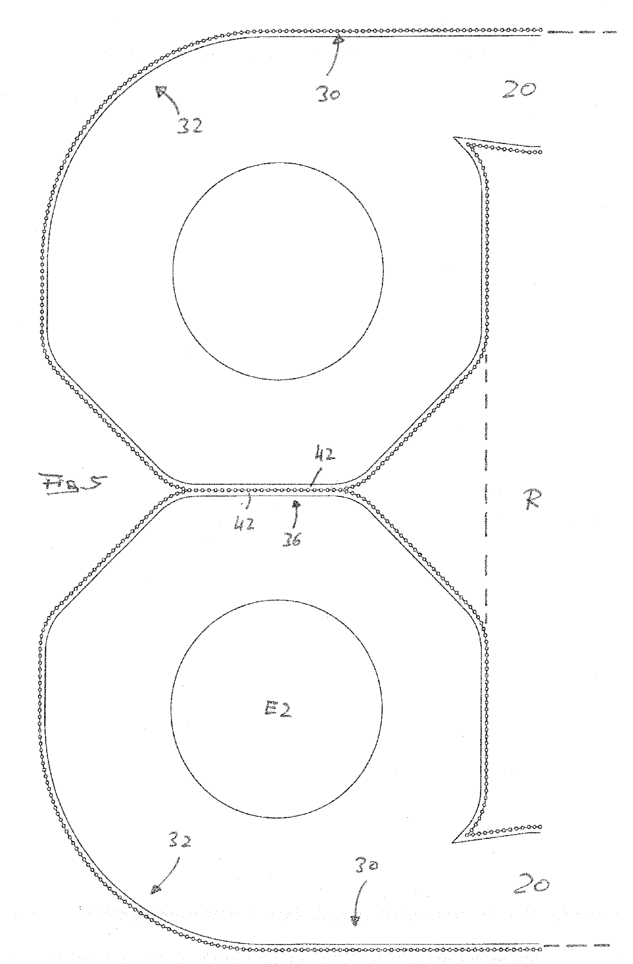

Planar further section 36: This planar further section 36 allows to construct a common wall with a second separator. Reference is made to Figure 5. This common wall 36 in Figure 5 is characterized by a refractory lining 42 on both sides of the tube-fin-metal construction (between the two refractory linings). The same is true with respect to common wall 40/11 in Figure 2, although not further displayed.

This common wall 40 or 11 respectively allows to advance separator S towards reaction chamber R and avoids any spaces in between. The common wall 40 (same is true for common wall 36) saves material and installation costs.

According to the embodiment of Figure 2 four planar further sections 34, 36, 38, 40 are made of identical shape. This further allows to reduce the production costs. These planar panel sections may be interconnected by prefabricated transition areas like TA3, TA4, TA5 and mounted on site.

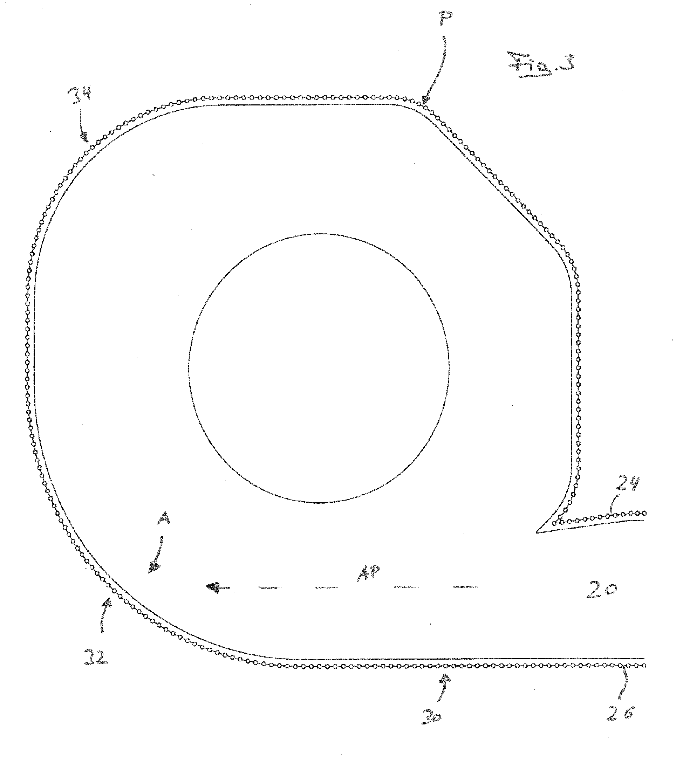

The embodiment according to Figure 3 differs from that of Figure 2 by the following:
First curved section 32 is followed by a small (short) planar section while planar further section 34 according to Fig. 2 is replaced by a second curved section 34.

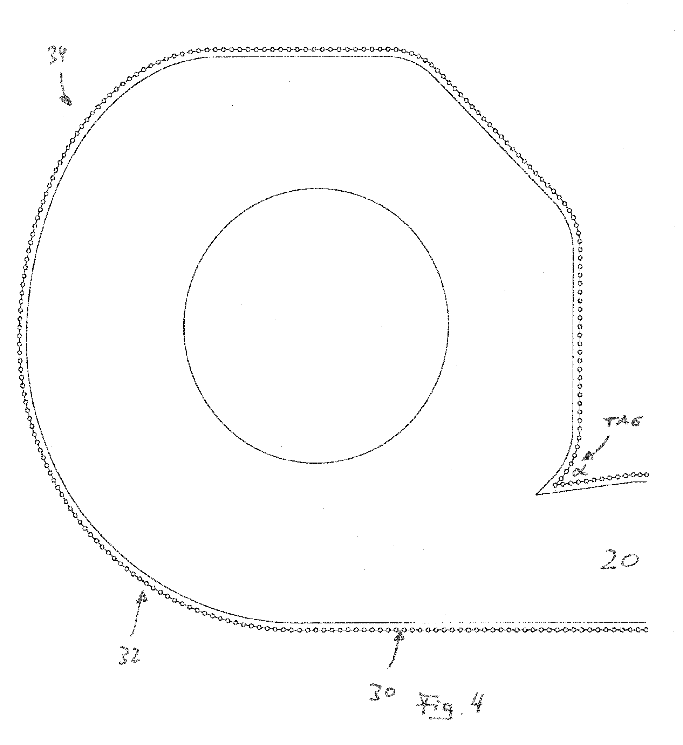

According to the embodiment of Figure 4 curved section 32, 34 are merged into one common arch (bow), which extends along approximately 180°.

To allow the gas flow to circulate, section 40 of paneling P is followed by a final transition area TA6 (in all embodiments) and defines an angle α with respect to wall 24 of circa 45°.

## Claims

1. A fluidized bed reactor, comprising the following features:
a) a reactor chamber (R) with at least one outlet port (12) at its upper part,
b) the outlet port (12) is designed as a tunnel (20), allowing a mixture of gas and solid particles, exhausted from the reaction chamber (R), enter an associated centrifugal separator (S),
c) the centrifugal separator (S) is of cylindrical shape and features an outer paneling (P), a first exit (E1) for the purified gas at its top end and a second exit (E2) for the a solid particles at its bottom end,
d) the tunnel (20) comprises a vertically extending outer side wall (22), a vertically extending inner side wall (24), a horizontally extending bottom wall (26) and a horizontally extending ceiling wall (28),
e) the outer side wall (22) of the tunnel (20) extends continuously into an entrance section (30) of the outer paneling (P) of the separator (S),
f) said entrance section (30) extends continuously into a first curved section (32) of the outer paneling (P), which first curved section being arranged at least in an axial projection (arrow AP) of the tunnel (20),
g) said first curved section (32) is followed by one or more further sections (34, 36, 38, 40) of the paneling (P), which end up at the inner side wall (24) of the tunnel (20), wherein
h) at least one further section (40) forms a common wall with the reactor chamber (R).

2. The fluidized bed reactor according to claim 1, wherein one or more of the further sections (34, 36, 38, 40) of the outer paneling (P) are plantar.

3. The fluidized bed reactor according to claim 1, wherein the common wall (40) is a planar wall.

4. The fluidized bed reactor according to claim 1, wherein the first curved section (32) extends about 60 to 150 degrees.

5. The fluidized bed reactor according to claim 1, wherein the first curved section (32) extends about 75 to 120 degrees.

6. The fluidized bed reactor according to claim 1, wherein the outer paneling (P) is made of vertically extending hollow tubes (T) and fins (F) in between.

7. The fluidized bed reactor according to claim 1, wherein said first curved section (32) extends continuously into the adjacent further section (34).

8. The fluidized bed reactor according to claim 1, wherein said further sections (34, 36, 38, 40) continuously extend into each other.

9. The fluidized bed reactor according to claim 1, wherein transition areas (TA 1... TA6) between adjacent sections (32,24; 34,36; 36,38; 38, 40) of the outer paneling (P) are curved.

10. The fluidized bed reactor according to claim 1, without any corner along the outer paneling (P).

11. The fluidized bed reactor according to claim 1, wherein said further section (40)of the outer paneling (P), ending up at the inner side wall (24) of the tunnel (20), forms an angle of less than 90 degrees with said inner side wall (24) of the tunnel (20).

12. The fluidized bed reactor according to claim 1, wherein at least part of the outer paneling (P) is lined along its inner surface with a refractory material (42).

13. The fluidized bed reactor according to claim 1, wherein at least the entrance section (30) and the first curved section (32) of the outer paneling (P) are lined along their inner surface with a refractory material (42).

14. The fluidized bed reactor according to claim 1, wherein said tunnel (20) has its largest cross section at its end inside the reaction chamber (R).

15. The fluidized bed reactor according to claim 1 with at least two outlet ports (12) according and at least two associated centrifugal separators (S) according to claim 1, wherein the outer paneling (P) of said two separators (S) have a common planar wall section (36).

## Amended claims

### Amended claims in accordance with Rule 137(2) EPC.

1. A fluidized bed reactor, comprising the following features:
a) a reactor chamber (R) with at least one outlet port (12) at its upper part,
b) the outlet port (12) is designed as a tunnel (20), allowing a mixture of gas and solid particles, exhausted from the reaction chamber (R), enter an associated centrifugal separator (S),
c) the centrifugal separator (S) is of cylindrical shape and features
c1) an outer paneling (P) made of vertically extending hollow tubes (T) and fins (F) in between,
c2) a first exit (E1) for the purified gas at its top end and
c3) a second exit (E2) for the solid particles at its bottom end,
d) the tunnel (20) comprises a vertically extending outer side wall (22), a vertically extending inner side wall (24), a horizontally extending bottom wall (26) and a horizontally extending ceiling wall (28),
e) the outer side wall (22) of the tunnel (20) extends continuously into an entrance section (30) of the outer paneling (P) of the separator (S),
f) said entrance section (30) extends continuously into a first curved section (32) of the outer paneling (P), which first curved section being arranged at least in an axial projection (arrow AP) of the tunnel (20) and extending about 60 to 150 degrees,
g) said first curved section (32) is followed by one or more further sections (34, 36, 38, 40) of the paneling (P), which end up at the inner side wall (24) of the tunnel (20), wherein
h) at least one further section (40) forms a common wall with the reactor chamber (R).

2. The fluidized bed reactor according to claim 1, wherein one or more of the further sections (34, 36, 38, 40) of the outer paneling (P) are planar.

3. The fluidized bed reactor according to claim 1, wherein the common wall (40) is a planar wall.

4. The fluidized bed reactor according to claim 1, wherein the first curved section (32) extends about 75 to 120 degrees.

5. The fluidized bed reactor according to claim 1, wherein said first curved section (32) extends continuously into the adjacent further section (34).

6. The fluidized bed reactor according to claim 1, wherein said further sections (34, 36, 38, 40) continuously extend into each other.

7. The fluidized bed reactor according to claim 1, wherein transition areas (TA 1... TA6) between adjacent sections (32,24; 34,36; 36,38; 38,40) of the outer paneling (P) are curved.

8. The fluidized bed reactor according to claim 1, without any corner along the outer paneling (P).

9. The fluidized bed reactor according to claim 1, wherein said further section (40)of the outer paneling (P), ending up at the inner side wall (24) of the tunnel (20), forms an angle of less than 90 degrees with said inner side wall (24) of the tunnel (20).

10. The fluidized bed reactor according to claim 1, wherein at least part of the outer paneling (P) is lined along its inner surface with a refractory material (42).

11. The fluidized bed reactor according to claim 1, wherein at least the entrance section (30) and the first curved-section (32) of the outer paneling (P) are lined along their inner surface with a refractory material (42).

12. The fluidized bed reactor according to claim 1, wherein said tunnel (20) has its largest cross section at its end inside the reaction chamber (R).

13. The fluidized bed reactor according to claim 1 with at least two outlet ports (12) according and at least two associated centrifugal separators (S) according to claim 1, wherein the outer paneling (P) of said two separators (S) have a common planar wall section (36).
